# EUROPÄISCHE PATENTSCHRIFT

(11) **EP 3 718 342 B1**
(45) Veröffentlichungstag und Bekanntmachung des Hinweises auf die Patenterteilung: **20.07.2022**
(21) Anmeldenummer: 19701991.2
(22) Anmeldetag: 10.01.2019
(51) Int. Cl.: H04W 40/12, H04W 84/20

(54) **FUNK-KOMMUNIKATIONSSYSTEM FÜR EIN INDUSTRIELLES AUTOMATISIERUNGSSYSTEM UND VERFAHREN ZUM BETRIEB EINES FUNK-KOMMUNIKATIONSSYSTEMS**
RADIO COMMUNICATION SYSTEM FOR AN INDUSTRIAL AUTOMATION SYSTEM AND METHOD FOR OPERATING A RADIO COMMUNICATION SYSTEM
SYSTÈME DE RADIOCOMMUNICATION POUR UN SYSTÈME D'AUTOMATISATION INDUSTRIELLE ET PROCÉDÉ DE FONCTIONNEMENT D'UN SYSTÈME DE RADIOCOMMUNICATION

(30) Priorität: 31.01.2018 EP 18154465
(43) Veröffentlichungstag der Anmeldung: 07.10.2020
(73) Patentinhaber: Siemens Aktiengesellschaft, 80333 München (DE)
(72) Erfinder: RICHTER, Siegfried, 91207 Lauf (DE); RIEDL, Johannes, 84030 Ergolding (DE); WALEWSKI, Joachim, 82008 Unterhaching (DE); ZEIGER, Florian, 85635 Höhenkirchen-Siegertsbrunn (DE); KLOIBER, Bernhard, 83620 Feldkirchen-Westerham (DE)
(86) Internationale Anmeldenummer: PCT/EP2019/050539
(87) Internationale Veröffentlichungsnummer: WO 2019/149494

(56) Entgegenhaltungen:
- WO-A1-2013/112465
- US-A1- 2017 288 827
- US-B1- 6 246 883

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In Erik Westerberg "4G/5G RAN architecture", Ericsson Technology Review, July 22, 2016, ISSN 0014-0171-284 23-3283 wird eine Architektur für 4G- und 5G-Mobilfunksysteme vorgeschlagen, die eine erhöhte Spektral-Effizienz und eine verbesserte Flexibilität bei einer Realisierung von Mobilfunksystemen bietet. Die Architektur umfasst auf Nutzerebene eine Paketverarbeitungsfunktion (Packet Processing Function - PPF) und eine Basisband-Signalverarbeitungsfunktion (Baseband Processing Function - BPF). Zusätzlich sind in der Architektur eine antennennahe Funk-Funktion (Radio Function - RF) und eine Funksteuerungsfunktion (Radio Control Function - RCF) auf Steuerungsebene vorgesehen. Die Paketverarbeitungsfunktion und die Basisband-Signalverarbeitungsfunktion können entweder in Netzwerkknoten integriert oder in einer virtualisierten Umgebung betrieben werden, wobei Mischformen möglich sind.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

Entsprechend EP 3 211 838 A1 ist in einem redundant betreibbaren industriellen Kommunikationssystem ein erstes Kommunikationsgerät mit Redundanzfunktion über einen ersten und zweiten Kommunikationsnetzanschluss redundant an einen ersten Switch o.ä. angeschlossen. Analog dazu ist ein zweites Kommunikationsgerät mit Redundanzfunktion über einen ersten und zweiten Kommunikationsnetzanschluss redundant an einen zweiten Switch o.ä. angeschlossen ist. Vom ersten Kommunikationsnetzanschluss des ersten und des zweiten Kommunikationsgeräts an den jeweiligen Switch übermittelte Datenrahmen werden einem ersten virtuellen lokalen Netz zugeordnet, während vom zweiten Kommunikationsnetzanschluss des ersten und des zweiten Kommunikationsgeräts an den jeweiligen Switch übermittelte Datenrahmen einem zweiten virtuellen lokalen Netz zugeordnet werden. Dem ersten virtuellen lokalen Netz zugeordnete Datenrahmen werden mittels einer jeweiligen ersten Funk-Transceiver-Station über ein erstes Funknetz gesendet, während dem zweiten virtuellen lokalen Netz zugeordnete Datenrahmen mittels einer jeweiligen zweiten Funk-Transceiver-Station über ein zweites Funknetz gesendet werden.

EP 3 211 962 A1 betrifft ein Funk-Kommunikationssystem für ein industrielles Automatisierungssystem, bei dem zumindest ein erstes und ein zweites Kommunikationsgerät redundant an ein industrielles Kommunikationsnetz angebunden sind. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Transceiver-Station verbunden. Die ersten und zweiten Funk-Transceiver-Stationen legen eine Reihenfolge für innerhalb eines vorgegebenen Zeitintervalls zu sendende Datenrahmen anhand den zu sendenden Datenrahmen zugeordneter Ziel-MAC-Adressen fest. Die Reihenfolge innerhalb an eine ausgewählte Ziel-MAC-Adresse zu sendender Datenrahmen wird durch ihre Eingangsreihenfolge festgelegt.

Aus US 2017/359190 A1 ist Steuerungssystem mit einer mobilen Controller-Einheit bekannt, die mittels Smartphone oder Laptop realisiert ist und mehreren gesteuerten Geräten als übergeordnete Steuerungseinheit zugeordnet werden kann. Zwischen der Controller-Einheit und den zugeordneten Geräten werden Erreichbarkeitsinformationen ausgetauscht. Anhand einer auf Grundlage der Erreichbarkeitsinformationen erstellten Erreichbarkeitskarte wählt die Controller-Einheit einen Kommunikationspfad zum Zugriff auf ein durch die Controller-Einheit gesteuertes Gerät aus.

In WO 2013/112465 A1 ist ein Verfahren entsprechend dem Oberbegriff von Anspruch 1 beschrieben. US 2017/288827 A1 offenbart, dass eine Basisstation anhand einer Gerätekennung Kommunikationsgerätegruppen bildet. Aus US 6 246 883 B1 ist eine Basisstation bekannt, die auf einem Fahrzeug angeordnet bzw. verfahrbar ist.

Der vorliegenden Erfindung liegt die Aufgabe zugrunde, ein Funk-Kommunikationssystem für ein industrielles Automatisierungssystem mit mobilen Kommunikationsteilnehmern zu schaffen, das eine effiziente und störungsarme Funk-Ressourcennutzung ermöglicht, ein Verfahren zu dessen Betrieb sowie geeignete Systemkomponenten anzugeben.

Diese Aufgabe wird erfindungsgemäß durch ein Funk-Kommunikationssystem mit den in Anspruch 1 angegebenen Merkmalen, durch eine Funk-Basisstation mit den in Anspruch 12 angegebenen Merkmalen und durch ein Verfahren mit den in Anspruch 13 angegebenen Merkmalen gelöst. Vorteilhafte Weiterbildungen der vorliegenden Erfindung sind in den abhängigen Ansprüchen angegeben.

Das erfindungsgemäße Funk-Kommunikationssystem für ein industrielles Automatisierungssystem umfasst zumindest ein als Funk-Basisstation betriebenes erstes Kommunikationsgerät, das zumindest eine Funk-Transceivereinheit aufweist, und mehrere als Funk-Teilnehmerstationen betriebene zweite Kommunikationsgeräte, die jeweils drahtlos mit dem ersten Kommunikationsgerät verbindbar sind und zumindest eine Funk-Transceivereinheit aufweisen. Das erste Kommunikationsgerät ist auf einem Fahrzeug angeordnet bzw. verfahrbar. Demgegenüber sind übliche Funk-Basisstationen fest angeordnet und nicht mobil. Das erste Kommunikationsgerät und die zweiten Kommunikationsgeräte können beispielsweise einem Wireless Local Area Network, einem WiMAX-, einem UMTS-, einem LTE-, einem 5G-Mobilfunknetz oder einem sonstigen Mobilfunknetz zugeordnet sein. Vorzugsweise sind das erste Kommunikationsgerät und die zweiten Kommunikationsgeräte für eine CSMA-Kollisionsvermeidung bzw. zur Anwendung von Listen Before Talk ausgestaltet und eingerichtet. Darüber hinaus ist das erste Kommunikationsgerät vorteilhafterweise zur Bearbeitung eines Mobility Management Entity bzw. Serving Gateway Protokollstacks ausgebildet und eingerichtet.

Erfindungsgemäß sind das erste Kommunikationsgerät und die zweiten Kommunikationsgeräte dafür ausgestaltet und eingerichtet, einer Kommunikationsgerätegruppe zugeordnet zu werden. Dabei sind das erste Kommunikationsgerät und die zweiten Kommunikationsgeräte nur innerhalb derselben Kommunikationsgerätegruppe drahtlos miteinander verbindbar. Außerdem sind das erste Kommunikationsgerät und die zweiten Kommunikationsgeräte dafür ausgestaltet und eingerichtet, miteinander Datenrahmen auszutauschen, die mittels für ihre zugeordnete Kommunikationsgerätegruppe reservierter Funk-Ressourcen übertragen werden.

Das erste Kommunikationsgerät und die zweiten Kommunikationsgeräte sind erfindungsgemäß ferner dafür ausgestaltet und eingerichtet, innerhalb ihrer zugeordneten Kommunikationsgerätegruppe anhand von Signalstärkemesswerten bzw. Positionsdaten Abstände zwischen dem ersten Kommunikationsgerät und dem jeweiligen zweiten Kommunikationsgerät zu ermitteln. Darüber hinaus ist das erste Kommunikationsgerät dafür ausgestaltet und eingerichtet, für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuzuteilen. Die Funk-Ressourcen umfassen Trägerfrequenzen, Bandbreite, Übertragungszeitfenster bzw. Sendeleistung.

Des Weiteren ist das erste Kommunikationsgerät erfindungsgemäß dafür ausgestaltet und eingerichtet, für eine Funk-Kommunikation mit dem jeweiligen zweiten Kommunikationsgerät bei abnehmendem Abstand eine Verringerung der Sendeleistung, erhöhte Dienstgüteanforderungen bzw. geänderte Codier- bzw. Modulationsschemata vorzugeben oder zu steuern. Vorzugsweise ist das erste Kommunikationsgerät dafür ausgestaltet und eingerichtet, die Funk-Ressourcen adaptiv zuzuteilen. Beispielsweise können damit Zellengrößen in Mobilfunksystemen adaptiv verkleinert werden, je näher Kommunikationsteilnehmer innerhalb einer Gruppe zueinander sind. Zudem können auf diese Weise Interferenzen zwischen Kommunikationsgerätegruppen verringert werden. Insbesondere können mit abnehmendem Abstand der Kommunikationsgeräte innerhalb einer Kommunikationsgerätegruppe verbesserte Dienstgüteparameter (Quality of Service) realisiert werden.

Erfindungsgemäß sind darüber hinaus mehrere als Funk-Basisstation betreibbare Kommunikationsgeräte vorgesehen. Die als Funk-Basisstation betreibbaren Kommunikationsgeräte sind dafür ausgestaltet und eingerichtet, bei einem Ausfall des ersten Kommunikationsgeräts und Vorhandensein weiterer als Funk-Basisstation betreibbarer Kommunikationsgeräte innerhalb ihrer Funk-Reichweite eine Auswahl des als Funk-Basisstation betriebenen ersten Kommunikationsgeräts durchzuführen. Auf diese Weise stellt ein Ausfall einer Basisstation keinen Single Point of Failure mehr dar bzw. hat keine nachteiligen Auswirkungen auf benachbarte Funkzellen. Entsprechend einer bevorzugten Weiterbildung der vorliegenden Erfindung sind die zweiten Kommunikationsgeräte dafür ausgestaltet und eingerichtet, bei einem Anmeldevorgang an einem als Funk-Basisstation betriebenen ersten Kommunikationsgerät Angaben zu jeweils zugeordneten Produktionsaufträgen bzw. zu Automatisierungsaufgaben oder -funktionen an das erste Kommunikationsgerät zu übermitteln. Außerdem ist das erste Kommunikationsgerät dafür ausgestaltet und eingerichtet, in Abhängigkeit von den übermittelten Angaben zweite Kommunikationsgeräte zu seiner eigenen Kommunikationsgerätegruppe zuzuordnen oder Anmeldeanfragen zweiter Kommunikationsgeräte abzulehnen. Eine Zuordnung des jeweiligen ersten oder zweiten Kommunikationsgeräts zu einer Kommunikationsgerätegruppe kann beispielsweise auf Basis eines Status eines Produktionsauftrags, einer Automatisierungsaufgabe oder -funktion, einer Geräteposition bzw. eines vorgegebenen Zeitbereichs erfolgen.

Dabei sind die als Funk-Basisstation betreibbaren Kommunikationsgeräte dafür ausgestaltet und eingerichtet, weitere als Funk-Basisstation betreibbare Kommunikationsgeräte innerhalb ihrer Funk-Reichweite zu ermitteln und ermittelte Kommunikationsgeräte darauf zu überprüfen, ob diese derselben Kommunikationsgerätegruppe zugeordnet sind. Darüber hinaus sind die als Funk-Basisstation betreibbaren Kommunikationsgeräte in diesem Fall dafür ausgestaltet und eingerichtet, bei Vorhandensein weiterer als Funk-Basisstation betreibbarer Kommunikationsgeräte innerhalb ihrer Funk-Reichweite, die derselben Kommunikationsgerätegruppe zugeordnet sind, anhand einer Gerätekennung bzw. eines Prioritätswerts untereinander das als Funk-Basisstation betriebene erste Kommunikationsgerät auszuwählen.

Entsprechend einer weiteren vorteilhaften Ausgestaltung der vorliegenden Erfindung sind die als Funk-Basisstation betreibbaren Kommunikationsgeräte wahlweise als Funk-Teilnehmerstation betreibbar. Dabei ist nicht als erstes Kommunikationsgerät ausgewählten Kommunikationsgeräten jeweils eine Rolle als zweites Kommunikationsgerät zugeordnet.

Außerdem sind das erste Kommunikationsgerät und die zweiten Kommunikationsgeräte vorteilhafterweise dafür ausgestaltet und eingerichtet, miteinander Datenrahmen auszutauschen, die mittels für ihre zugeordnete Kommunikationsgerätegruppe exklusiv reservierter Funk-Ressourcen übertragen werden. Entsprechend einer weiteren vorteilhaften Ausgestaltung kann das erste Kommunikationsgerät dafür ausgestaltet und eingerichtet sein, nicht benötigte Funk-Ressourcen zur Nutzung durch andere Kommunikationsgerätegruppen freizugeben. Dies ermöglicht eine besonders effiziente Nutzung von Funk-Ressourcen.

Die erfindungsgemäße Funk-Basisstation ist für ein Kommunikationssystem entsprechend vorangehenden Ausführungen vorgesehen und umfasst zumindest eine Funk-Transceivereinheit, so dass die Funk-Basisstation drahtlos mit als Funk-Teilnehmerstationen betriebenen Kommunikationsgeräten verbindbar ist. Darüber hinaus ist die Funk-Basisstation auf einem Fahrzeug angeordnet oder verfahrbar sowie dafür ausgestaltet und eingerichtet, einer Kommunikationsgerätegruppe zugeordnet zu werden. Dabei ist die Funk-Basisstation nur innerhalb derselben Kommunikationsgerätegruppe mit als Funk-Teilnehmerstationen betriebenen Kommunikationsgeräten drahtlos verbindbar.

Erfindungsgemäß ist die Funk-Basisstation dafür ausgestaltet und eingerichtet, mit als Funk-Teilnehmerstationen betriebenen Kommunikationsgeräten Datenrahmen auszutauschen, die mittels für ihre zugeordnete Kommunikationsgerätegruppe reservierter Funk-Ressourcen übertragen werden. Außerdem ist die Funk-Basisstation dafür ausgestaltet und eingerichtet, innerhalb ihrer zugeordneten Kommunikationsgerätegruppe anhand von Signalstärkemesswerten bzw. Positionsdaten Abstände zu als Funk-Teilnehmerstationen betriebenen Kommunikationsgeräten zu ermitteln. Zusätzlich ist die Funk-Basisstation dafür ausgestaltet und eingerichtet, für eine Funk-Kommunikation mit dem jeweiligen als Funk-Teilnehmerstation betriebenen Kommunikationsgerät innerhalb der zugeordneten Kommunikationsgerätegruppe in Abhängigkeit von den ermittelten Abständen Funk-Ressourcen zuzuteilen. Die Funk-Ressourcen umfassen Trägerfrequenzen, Bandbreite, Übertragungszeitfenster bzw. Sendeleistung. Des Weiteren ist die Funk-Basisstation dafür ausgestaltet und eingerichtet, für eine Funk-Kommunikation mit dem jeweiligen als Funk-Teilnehmerstation betriebenen Kommunikationsgerät bei abnehmendem Abstand eine Verringerung der Sendeleistung, erhöhte Dienstgüteanforderungen bzw. geänderte Codier- bzw. Modulationsschemata vorzugeben oder zu steuern.

Das erfindungsgemäße Verfahren ist zum Betrieb eines Funk-Kommunikationssystems entsprechend vorangehenden Ausführungen vorgesehen und umfasst zumindest ein als Funk-Basisstation betriebenes erstes Kommunikationsgerät, das zumindest eine Funk-Transceivereinheit aufweist, und mehrere als Funk-Teilnehmerstationen betriebene zweite Kommunikationsgeräte, die jeweils drahtlos mit dem ersten Kommunikationsgerät verbindbar sind und zumindest eine Funk-Transceivereinheit aufweisen. Das erste Kommunikationsgerät ist auf einem Fahrzeug angeordnet oder verfahrbar. Ferner sind das erste Kommunikationsgerät und die zweiten Kommunikationsgeräte einer Kommunikationsgerätegruppe zuordenbar und nur innerhalb derselben Kommunikationsgerätegruppe drahtlos miteinander verbindbar.

Entsprechend dem erfindungsgemäßen Verfahren tauschen das erste Kommunikationsgerät und die zweiten Kommunikationsgeräte miteinander Datenrahmen aus, die mittels für ihre zugeordnete Kommunikationsgerätegruppe reservierter Funk-Ressourcen übertragen werden. Außerdem ermitteln das erste Kommunikationsgerät und die zweiten Kommunikationsgeräte innerhalb ihrer zugeordneten Kommunikationsgerätegruppe anhand von Signalstärkemesswerten bzw. Positionsdaten Abstände zwischen dem ersten Kommunikationsgerät und dem jeweiligen zweiten Kommunikationsgerät. In Abhängigkeit von den ermittelten Abständen teilt das erste Kommunikationsgerät für eine Funk-Kommunikation mit dem jeweiligen zweiten Kommunikationsgerät innerhalb der zugeordneten Kommunikationsgerätegruppe Funk-Ressourcen zu. Dabei umfassen die Funk-Ressourcen Trägerfrequenzen, Bandbreite, Übertragungszeitfenster bzw. Sendeleistung. Für eine Funk-Kommunikation mit dem jeweiligen zweiten Kommunikationsgerät gibt das erste Kommunikationsgerät bei abnehmendem Abstand eine Verringerung der Sendeleistung, erhöhte Dienstgüteanforderungen bzw. geänderte Codier- bzw. Modulationsschemata vor oder steuert dies.

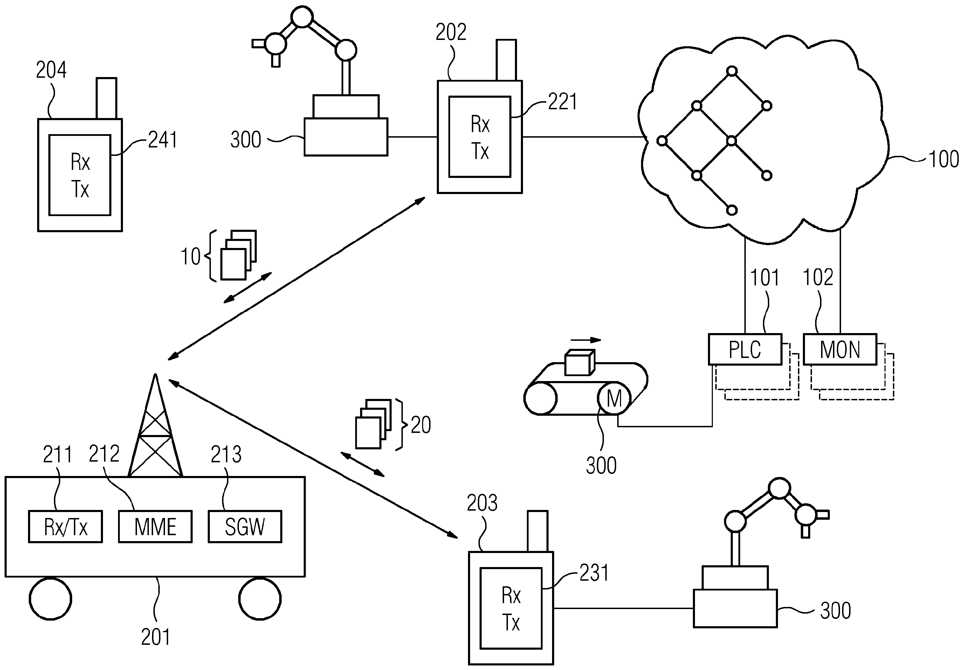

Die vorliegende Erfindung wird nachfolgend an einem Ausführungsbeispiel anhand der Zeichnung näher erläutert. Es zeigt die
- Figur: ein industrielles Automatisierungssystem mit einem Kommunikationsnetz und einem an dieses angeschlossenen Funk-Kommunikationssystem.

Das in der Figur dargestellte industrielle Automatisierungssystem umfasst ein Kommunikationsnetz 100, an das mehrere Automatisierungsgeräte 101, 102 und ein Funk-Kommunikationssystem angeschlossen sind. Das Funk-Kommunikationssystem umfasst im vorliegenden Ausführungsbeispiel eine Funk-Basisstation 201 und mehrere mit der Funk-Basisstation 201 drahtlos verbindbare Funk-Teilnehmerstationen 202-204. Dabei ist eine erste Funk-Teilnehmerstation 202 drahtgebunden mit dem Kommunikationsnetz 100 verbunden.

Das Kommunikationsnetz 100 umfasst eine Vielzahl von Netzknoten, an denen Netzinfrastrukturgeräte vorgesehen sind. Die Netzinfrastrukturgeräte 200-202 können beispielsweise Switche, Router oder Firewalls sein und zum Anschluss von Automatisierungsgeräten 101, 102 dienen. Zu Automatisierungsgeräten zählen insbesondere speicherprogrammierbaren Steuerungen 101, Eingabe/Ausgabe-Einheiten (I/O-Module) oder Bedien- und Beobachtungsstationen 102 des industriellen Automatisierungssystems. Zusätzlich kann das Kommunikationsnetz 100 auch Netzknoten mit einem Packet Data Network Gateway (PGW) und ein Home Subscriber Server (HSS) umfassen, die funktionell dem Funk-Kommunikationssystem zugeordnet sind.

Speicherprogrammierbare Steuerungen 101 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung 101 beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung 101 und einem mit der speicherprogrammierbaren Steuerung 101 verbundenen Sensor bzw. einer gesteuerten Maschine oder Anlage 300. Ein Sensor bzw. eine Maschine oder Anlage 300 kann grundsätzlich auch über das Funk-Kommunikationssystem mit einer speicherprogrammierbaren Steuerung 101 verbunden werden. Die Zentraleinheit einer speicherprogrammierbaren Steuerung 101 ist insbesondere für eine Ermittlung geeigneter Steuerungsgrößen aus erfassten Messgrößen vorgesehen. Obige Komponenten einer speicherprogrammierbaren Steuerung 101 können beispielsweise über ein Rückwandbus-System miteinander verbunden werden.

Eine Bedien- und Beobachtungsstation 102 dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 102 zur Anzeige von Werten eines Regelungskreises und zur Veränderung von Regelungsparametern verwendet. Bedien- und Beobachtungsstationen 102 umfassen zumindest eine graphische Benutzerschnittstelle, ein Eingabegerät, eine Prozessoreinheit und ein Kommunikationsmodul.

Sowohl die Funk-Basisstation 201 als auch die Funk-Teilnehmerstationen 202, 203 umfassen jeweils neben einer Antennenanordnung eine Funk-Transceivereinheit 211, 221, 231, 241 mit einer PHY- und einer MAC-Funktionseinheit. Die Funk-Basisstation 201 und die Funk-Teilnehmerstationen 202-204 können beispielsweise einem Wireless Local Area Network, einem WiMAX-, einem UMTS-, einem LTE-, einem 5G-Mobilfunknetz oder einem sonstigen Mobilfunknetz zugeordnet sein. Darüber hinaus sind die Funk-Basisstation 201 einerseits und die Funk-Teilnehmerstationen 202-204 andererseits grundsätzlich dafür ausgestaltet und eingerichtet, über die Funk-Basisstation 201 Datenrahmen 10, 20 auszutauschen. Die Datenrahmen 10, 20 umfassen im vorliegenden Ausführungsbeispiel insbesondere Prozessdaten bzw. Mess- und Steuerungsgrößen, die mit der Funk-Basisstation 201 bzw. mit den Funk-Teilnehmerstationen 202, 203 verbundenen Fahrzeugen bzw. Sensoren, Maschinen oder Anlagen 300 zugeordnet sind. Vorzugsweise sind die Funk-Basisstation und die Funk-Teilnehmerstationen für eine CSMA-Kollisionsvermeidung und zur Anwendung von Listen Before Talk ausgestaltet und eingerichtet.

Im vorliegenden Ausführungsbeispiel ist die Funk-Basisstation 201 auf einem Fahrzeug angeordnet bzw. verfahrbar. Beispielsweise kann ein solches Fahrzeug ein Automated Guided Vehicle sein, das von einem der ersten Funk-Teilnehmerstation 202 zugeordneten ersten Roboter Werkstücke entgegennimmt und zur weiteren Bearbeitung zu einem zweiten Roboter transportiert, der einer zweiten Funk-Teilnehmerstation 203 zugeordnet ist. Grundsätzlich können die Funk-Basisstation 201 und die Funk-Teilnehmerstationen 202-204 jeweils zu einer Kommunikationsgerätegruppe zugeordnet werden. Dabei sind die Funk-Basisstation 201 und die Funk-Teilnehmerstationen 202-204 jedoch nur innerhalb derselben Kommunikationsgerätegruppe drahtlos miteinander verbindbar. Insbesondere sind die Funk-Basisstation 201 und die Funk-Teilnehmerstationen 202-204 dafür ausgestaltet und eingerichtet, miteinander Datenrahmen 10, 20 auszutauschen, die mittels für ihre zugeordnete Kommunikationsgerätegruppe exklusiv reservierter Funk-Ressourcen übertragen werden.

Eine Zuordnung von Funk-Basisstationen oder Funk-Teilnehmerstationen zu einer Kommunikationsgerätegruppe kann beispielsweise auf Basis eines Status eines Produktionsauftrags, einer Automatisierungsaufgabe oder -funktion, einer Geräteposition bzw. eines vorgegebenen Zeitbereichs erfolgen. Im vorliegenden Ausführungsbeispiel werden die Funk-Basisstation 201 sowie die erste Funk-Teilnehmerstation 202 und die zweite Funk-Teilnehmerstation 203 aufgrund obiger Transport- bzw. Automatisierungsaufgabe zur selben Kommunikationsgerätegruppe zugeordnet, die jedoch insbesondere nicht die Funk-Teilnehmerstation 204 umfasst.

Die Funk-Basisstation 201 und die Funk-Teilnehmerstationen 202, 203 ermitteln innerhalb ihrer Kommunikationsgerätegruppe anhand von Signalstärkemesswerten bzw. Positionsdaten Abstände zwischen der Funk-Basisstation 201 und der jeweiligen Funk-Teilnehmerstation 202, 203. Des Weiteren ist die Funk-Basisstation 201 dafür ausgestaltet und eingerichtet, für eine Funk-Kommunikation mit der jeweiligen Funk-Teilnehmerstation 202, 203 innerhalb ihrer Kommunikationsgerätegruppe in Abhängigkeit von den ermittelten Abständen Funk-Ressourcen adaptiv zuzuteilen. Die Funk-Ressourcen umfassen beispielsweise Trägerfrequenzen, Bandbreite, Übertragungszeitfenster, Kommunikationsnetz-Partitionen bzw. Sendeleistung. Darüber hinaus ist die Funk-Basisstation 201 zur Bearbeitung eines Mobility Management Entity (MME) und eines Serving Gateway (SGW) Protokollstacks ausgebildet und eingerichtet. Dementsprechend umfasst die Funk-Basisstation 201 eine MME-Funktionseinheit 212 und eine SGW-Funktionseinheit 213.

Die Funk-Basisstation 201 ist insbesondere dafür konfiguriert, für eine Funk-Kommunikation mit der jeweiligen Funk-Teilnehmerstation 202, 203 bei abnehmendem Abstand eine Verringerung der Sendeleistung, erhöhte Dienstgüteanforderungen und geänderte Codier- bzw. Modulationsschemata vorzugeben oder zu steuern. Außerdem ist die Funk-Basisstation 201 vorzugsweise dafür ausgestaltet und eingerichtet ist, nicht benötigte Funk-Ressourcen zur Nutzung durch andere Kommunikationsgerätegruppen freizugeben.

Die Funk-Teilnehmerstationen 202-204 sind im vorliegenden Ausführungsbeispiel dafür ausgestaltet und eingerichtet, bei einem Anmeldevorgang an einer Funk-Basisstation Angaben zu jeweils zugeordneten Produktionsaufträgen bzw. Automatisierungsaufgaben oder -funktionen an die Funk-Basisstation zu übermitteln. Dementsprechend ist die Funk-Basisstation 201 dafür ausgestaltet und eingerichtet, in Abhängigkeit von den übermittelten Angaben Funk-Teilnehmerstationen zu seiner eigenen Kommunikationsgerätegruppe zuzuordnen oder Anmeldeanfragen von Funk-Teilnehmerstationen abzulehnen.

Sind mehrere als Funk-Basisstation betreibbare Kommunikationsgeräte vorgesehen, ermitteln als Funk-Basisstation betreibbaren Kommunikationsgeräte innerhalb ihrer Funk-Reichweite weitere als Funk-Basisstation betreibbare Kommunikationsgeräte. Die ermittelten Kommunikationsgeräte werden dann darauf überprüft, ob sie derselben Kommunikationsgerätegruppe zugeordnet sind. Bei Vorhandensein weiterer als Funk-Basisstation betreibbarer Kommunikationsgeräte innerhalb ihrer Funk-Reichweite wählen die als Funk-Basisstation betreibbaren Kommunikationsgeräte, die derselben Kommunikationsgerätegruppe zugeordnet sind, anhand einer Gerätekennung bzw. eines Prioritätswerts untereinander das als Funk-Basisstation betriebene erste Kommunikationsgerät aus. Kommunikationsgeräten, die wahlweise als Funk-Basisstation oder als Funk-Teilnehmerstation betreibbar sind, wird vorzugsweise eine Rolle als Funk-Teilnehmerstation zugeordnet, sofern ihnen nach obiger Auswahl keine Rolle als Funk-Basisstation zukommt. Vorteilhafterweise sind die als Funk-Basisstation betreibbaren Kommunikationsgeräte dafür ausgestaltet und eingerichtet, bei einem Ausfall der ausgewählten Funk-Basisstation und Vorhandensein weiterer als Funk-Basisstation betreibbarer Kommunikationsgeräte innerhalb ihrer Funk-Reichweite eine erneute Auswahl des als Funk-Basisstation betriebenen Kommunikationsgeräts durchzuführen.

## Patentansprüche

1. Funk-Kommunikationssystem für ein industrielles Automatisierungssystem mit
- zumindest einem als Funk-Basisstation betriebenen ersten Kommunikationsgerät (201), das zumindest eine Funk-Transceivereinheit (211) umfasst,
- mehreren als Funk-Teilnehmerstationen betriebenen zweiten Kommunikationsgeräten (202-204), die jeweils drahtlos mit dem ersten Kommunikationsgerät verbindbar sind und zumindest eine Funk-Transceivereinheit (221, 231, 241) umfassen,
- wobei das erste Kommunikationsgerät und die zweiten Kommunikationsgeräte dafür ausgestaltet und eingerichtet sind, einer Kommunikationsgerätegruppe zugeordnet zu werden,
- wobei das erste Kommunikationsgerät und die zweiten Kommunikationsgeräte nur innerhalb derselben Kommunikationsgerätegruppe drahtlos miteinander verbindbar sind,
- wobei das erste Kommunikationsgerät und die zweiten Kommunikationsgeräte dafür ausgestaltet und eingerichtet sind, miteinander Datenrahmen (10, 20) auszutauschen, die mittels für ihre zugeordnete Kommunikationsgerätegruppe reservierter Funk-Ressourcen übertragen werden,
- wobei das erste Kommunikationsgerät und die zweiten Kommunikationsgeräte dafür ausgestaltet und eingerichtet sind, innerhalb ihrer zugeordneten Kommunikationsgerätegruppe anhand von Signalstärkemesswerten und/oder Positionsdaten Abstände zwischen dem ersten Kommunikationsgerät und dem jeweiligen zweiten Kommunikationsgerät zu ermitteln,
- wobei das erste Kommunikationsgerät dafür ausgestaltet und eingerichtet ist, für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuzuteilen, wobei die Funk-Ressourcen Trägerfrequenzen, Bandbreite, Übertragungszeitfenster und/oder Sendeleistung umfassen,
- wobei das erste Kommunikationsgerät dafür ausgestaltet und eingerichtet ist, für eine Funk-Kommunikation mit dem jeweiligen zweiten Kommunikationsgerät bei abnehmendem Abstand eine Verringerung der Sendeleistung, erhöhte Dienstgüteanforderungen und/oder geänderte Codier- und/oder Modulationsschemata vorzugeben oder zu steuern,
**dadurch gekennzeichnet, dass**
- das erste Kommunikationsgerät auf einem Fahrzeug angeordnet oder verfahrbar ist,
- mehrere als Funk-Basisstation betreibbare Kommunikationsgeräte vorgesehen sind,
- die als Funk-Basisstation betreibbaren Kommunikationsgeräte dafür ausgestaltet und eingerichtet sind, bei einem Ausfall des ersten Kommunikationsgeräts und Vorhandensein weiterer als Funk-Basisstation betreibbarer Kommunikationsgeräte innerhalb ihrer Funk-Reichweite eine Auswahl des als Funk-Basisstation betriebenen ersten Kommunikationsgeräts durchzuführen.

2. Kommunikationssystem nach Anspruch 1,
bei dem die zweiten Kommunikationsgeräte dafür ausgestaltet und eingerichtet sind, bei einem Anmeldevorgang an einem als Funk-Basisstation betriebenen ersten Kommunikationsgerät Angaben zu jeweils zugeordneten Produktionsaufträgen und/oder Automatisierungsaufgaben oder -funktionen an das erste Kommunikationsgerät zu übermitteln, und bei dem das erste Kommunikationsgerät dafür ausgestaltet und eingerichtet ist, in Abhängigkeit von den übermittelten Angaben zweite Kommunikationsgeräte zu seiner eigenen Kommunikationsgerätegruppe zuzuordnen oder Anmeldeanfragen zweiter Kommunikationsgeräte abzulehnen.

3. Kommunikationssystem nach einem der Ansprüche 1 oder 2, bei dem eine Zuordnung des jeweiligen ersten oder zweiten Kommunikationsgeräts zu einer Kommunikationsgerätegruppe auf Basis eines Status eines Produktionsauftrags, einer Automatisierungsaufgabe oder -funktion, einer Geräteposition und/oder eines vorgegebenen Zeitbereichs erfolgt.

4. Kommunikationssystem nach einem der Ansprüche 1 bis 3, bei dem die als Funk-Basisstation betreibbaren Kommunikationsgeräte dafür ausgestaltet und eingerichtet sind, weitere als Funk-Basisstation betreibbare Kommunikationsgeräte innerhalb ihrer Funk-Reichweite zu ermitteln und ermittelte Kommunikationsgeräte darauf zu überprüfen, ob diese derselben Kommunikationsgerätegruppe zugeordnet sind, und bei dem die als Funk-Basisstation betreibbaren Kommunikationsgeräte dafür ausgestaltet und eingerichtet sind, bei Vorhandensein weiterer als Funk-Basisstation betreibbarer Kommunikationsgeräte innerhalb ihrer Funk-Reichweite, die derselben Kommunikationsgerätegruppe zugeordnet sind, anhand einer Gerätekennung und/oder eines Prioritätswerts untereinander das als Funk-Basisstation betriebene erste Kommunikationsgerät auszuwählen.

5. Kommunikationssystem nach Anspruch 4,
bei dem die als Funk-Basisstation betreibbaren Kommunikationsgeräte wahlweise als Funk-Teilnehmerstation betreibbar sind und bei dem nicht als erstes Kommunikationsgerät ausgewählten Kommunikationsgeräten jeweils eine Rolle als zweites Kommunikationsgerät zugeordnet ist.

6. Kommunikationssystem nach einem der Ansprüche 1 bis 5, bei dem das erste Kommunikationsgerät dafür ausgestaltet und eingerichtet ist, die Funk-Ressourcen adaptiv zuzuteilen.

7. Kommunikationssystem nach einem der Ansprüche 1 bis 6, bei dem das erste Kommunikationsgerät und die zweiten Kommunikationsgeräte dafür ausgestaltet und eingerichtet sind, miteinander Datenrahmen (10, 20) auszutauschen, die mittels für ihre zugeordnete Kommunikationsgerätegruppe exklusiv reservierter Funk-Ressourcen übertragen werden.

8. Kommunikationssystem nach einem der Ansprüche 1 bis 7, bei dem das erste Kommunikationsgerät dafür ausgestaltet und eingerichtet ist, nicht benötigte Funk-Ressourcen zur Nutzung durch andere Kommunikationsgerätegruppen freizugeben.

9. Kommunikationssystem nach einem der Ansprüche 1 bis 8, bei dem das erste Kommunikationsgerät und die zweiten Kommunikationsgeräte für eine CSMA-Kollisionsvermeidung und/oder zur Anwendung von Listen Before Talk ausgestaltet und eingerichtet sind.

10. Kommunikationssystem nach einem der Ansprüche 1 bis 9, bei dem das erste Kommunikationsgerät und die zweiten Kommunikationsgeräte einem Wireless Local Area Network, einem WiMAX-, einem UMTS-, einem LTE-, einem 5G-Mobilfunknetz oder einem sonstigen Mobilfunknetz zugeordnet sind.

11. Kommunikationssystem nach einem der Ansprüche 1 bis 10, bei dem das erste Kommunikationsgerät zur Bearbeitung eines Mobility Management Entity und/oder Serving Gateway Protokollstacks ausgebildet und eingerichtet ist.

12. Funk-Basisstation für ein Kommunikationssystem nach einem der Ansprüche 1 bis 11 mit
- zumindest einer Funk-Transceivereinheit (211),
- wobei die Funk-Basisstation (201) drahtlos mit als Funk-Teilnehmerstationen betriebenen Kommunikationsgeräten (202-204) verbindbar ist,
- wobei die Funk-Basisstation dafür ausgestaltet und eingerichtet ist, einer Kommunikationsgerätegruppe zugeordnet zu werden, wobei die Funk-Basisstation nur innerhalb derselben Kommunikationsgerätegruppe mit als Funk-Teilnehmerstationen betriebenen Kommunikationsgeräten drahtlos verbindbar ist,
- wobei die Funk-Basisstation dafür ausgestaltet und eingerichtet ist, mit als Funk-Teilnehmerstationen betriebenen Kommunikationsgeräten Datenrahmen (10, 20) auszutauschen, die mittels für ihre zugeordnete Kommunikationsgerätegruppe reservierter Funk-Ressourcen übertragen werden,
- wobei die Funk-Basisstation dafür ausgestaltet und eingerichtet ist, innerhalb ihrer zugeordneten Kommunikationsgerätegruppe anhand von Signalstärkemesswerten und/oder Positionsdaten Abstände zu als Funk-Teilnehmerstationen betriebenen Kommunikationsgeräten zu ermitteln,
- wobei die Funk-Basisstation dafür ausgestaltet und eingerichtet ist, für eine Funk-Kommunikation mit dem jeweiligen als Funk-Teilnehmerstation betriebenen Kommunikationsgerät innerhalb der zugeordneten Kommunikationsgerätegruppe in Abhängigkeit von den ermittelten Abständen Funk-Ressourcen zuzuteilen, wobei die Funk-Ressourcen Trägerfrequenzen, Bandbreite, Übertragungszeitfenster und/oder Sendeleistung umfassen,
- die Funk-Basisstation dafür ausgestaltet und eingerichtet ist, für eine Funk-Kommunikation mit dem jeweiligen als Funk-Teilnehmerstation betriebenen Kommunikationsgerät bei abnehmendem Abstand eine Verringerung der Sendeleistung, erhöhte Dienstgüteanforderungen und/oder geänderte Codier- und/oder Modulationsschemata vorzugeben oder zu steuern,
**dadurch gekennzeichnet, dass**
- die Funk-Basisstation auf einem Fahrzeug angeordnet oder verfahrbar ist,
- mehrere als Funk-Basisstation betreibbare Kommunikationsgeräte vorgesehen sind,
- die Funk-Basisstation dafür ausgestaltet und eingerichtet ist, bei einem Ausfall eines als Funk-Basisstation betriebenen Kommunikationsgeräts und Vorhandensein weiterer als Funk-Basisstation betreibbarer Kommunikationsgeräte mit diesen eine Auswahl des als Funk-Basisstation betriebenen Kommunikationsgeräts durchzuführen.

13. Verfahren zum Betrieb eines Funk-Kommunikationssystems für ein industrielles Automatisierungssystem nach einem der Ansprüche 1 bis 11, bei dem
- das Funk-Kommunikationssystem zumindest ein als Funk-Basisstation betriebenes erstes Kommunikationsgerät (201), das zumindest eine Funk-Transceivereinheit (211) aufweist, und
- mehrere als Funk-Teilnehmerstationen betriebene zweite Kommunikationsgeräte (202-204) umfasst, die jeweils drahtlos mit dem ersten Kommunikationsgerät verbindbar sind und zumindest eine Funk-Transceivereinheit (221, 231, 241) aufweisen,
- das erste Kommunikationsgerät und die zweiten Kommunikationsgeräte einer Kommunikationsgerätegruppe zuordenbar und nur innerhalb derselben Kommunikationsgerätegruppe drahtlos miteinander verbindbar sind,
- das erste Kommunikationsgerät und die zweiten Kommunikationsgeräte miteinander Datenrahmen (10, 20) austauschen, die mittels für ihre zugeordnete Kommunikationsgerätegruppe reservierter Funk-Ressourcen übertragen werden,
- das erste Kommunikationsgerät und die zweiten Kommunikationsgeräte innerhalb ihrer zugeordneten Kommunikationsgerätegruppe anhand von Signalstärkemesswerten und/oder Positionsdaten Abstände zwischen dem ersten Kommunikationsgerät und dem jeweiligen zweiten Kommunikationsgerät ermitteln,
- das erste Kommunikationsgerät für eine Funk-Kommunikation mit dem jeweiligen zweiten Kommunikationsgerät innerhalb der zugeordneten Kommunikationsgerätegruppe in Abhängigkeit von den ermittelten Abständen Funk-Ressourcen zuteilt wobei die Funk-Ressourcen Trägerfrequenzen, Bandbreite, Übertragungszeitfenster und/oder Sendeleistung umfassen,
- das erste Kommunikationsgerät für eine Funk-Kommunikation mit dem jeweiligen zweiten Kommunikationsgerät bei abnehmendem Abstand eine Verringerung der Sendeleistung, erhöhte Dienstgüteanforderungen und/oder geänderte Codier- und/oder Modulationsschemata vorgibt oder steuert,
**dadurch gekennzeichnet, dass**
- das erste Kommunikationsgerät auf einem Fahrzeug angeordnet oder verfahrbar ist,
- mehrere als Funk-Basisstation betreibbare Kommunikationsgeräte vorgesehen sind,
- die als Funk-Basisstation betreibbaren Kommunikationsgeräte bei einem Ausfall des ersten Kommunikationsgeräts und Vorhandensein weiterer als Funk-Basisstation betreibbarer Kommunikationsgeräte innerhalb ihrer Funk-Reichweite eine Auswahl des als Funk-Basisstation betriebenen ersten Kommunikationsgeräts durchführen.

## Claims

1. Radio communication system for an industrial automation system, having
- at least one first communication device (201), operated as a radio base station, that comprises at least one radio transceiver unit (211),
- multiple second communication devices (202-204), operated as radio subscriber stations, that are each wirelessly connectable to the first communication device and comprise at least one radio transceiver unit (221, 231, 241),
- wherein the first communication device and the second communication devices are designed and configured to be assigned to a communication device group,
- wherein the first communication device and the second communication devices are wirelessly connectable to one another only within the same communication device group,
- wherein the first communication device and the second communication devices are designed and configured to interchange data frames (10, 20) with one another that are transmitted by means of radio resources reserved for their associated communication device group,
- wherein the first communication device and the second communication devices are designed and configured to determine distances between the first communication device and the respective second communication device within their associated communication device group on the basis of signal strength measured values and/or position data,
- wherein the first communication device is designed and configured to allocate radio resources for a radio communication with the respective second communication device within the associated communication device group on the basis of the determined distances, the radio resources comprising carrier frequencies, bandwidth, transmission time windows and/or transmission power,
- wherein the first communication device is designed and configured to prescribe or to control a reduction in transmission power, increased quality-of-service requirements and/or changed coding and/or modulation schemes for a radio communication with the respective second communication device if the distance decreases,
**characterized in that**
- the first communication device is arranged or movable on a vehicle,
- there is provision for multiple communication devices operable as a radio base station,
- the communication devices operable as a radio base station are designed and configured so as, if the first communication device fails and further communication devices operable as a radio base station are present within their radio range, to make a selection of the first communication device operated as a radio base station.

2. Communication system according to Claim 1,
in which the second communication devices are designed and configured so as, during a registration process on a first communication device operated as a radio base station, to convey details pertaining to respectively assigned production tasks and/or automation tasks or functions to the first communication device, and in which the first communication device is designed and configured to take the conveyed details as a basis for assigning second communication devices to its own communication device group or rejecting registration requests from second communication devices.

3. Communication system according to either of Claims 1 and 2,
in which the respective first or second communication device is assigned to a communication device group on the basis of a status of a production task, an automation task or function, a device position and/or a prescribed time range.

4. Communication system according to one of Claims 1 to 3,
in which the communication devices operable as a radio base station are designed and configured to discover further communication devices operable as a radio base station within their radio range and to check discovered communication devices for whether they are assigned to the same communication device group, and in which the communication devices operable as a radio base station are designed and configured so as, if there are further communication devices operable as a radio base station present within their radio range that are assigned to the same communication device group, to take a device identifier and/or a priority value among one another as a basis for selecting the first communication device operated as a radio base station.

5. Communication system according to Claim 4,
in which the communication devices operable as a radio base station are selectively operable as a radio subscriber station and in which communication devices that are not selected as a first communication device each have an assigned role as a second communication device.

6. Communication system according to one of Claims 1 to 5,
in which the first communication device is designed and configured to allocate the radio resources adaptively.

7. Communication system according to one of Claims 1 to 6,
in which the first communication device and the second communication devices are designed and configured to interchange data frames (10, 20) with one another that are transmitted by means of radio resources reserved exclusively for their associated communication device group.

8. Communication system according to one of Claims 1 to 7,
in which the first communication device is designed and configured to release unneeded radio resources for use by other communication device groups.

9. Communication system according to one of Claims 1 to 8,
in which the first communication device and the second communication devices are designed and configured for CSMA collision avoidance and/or to use listen before talk.

10. Communication system according to one of Claims 1 to 9,
in which the first communication device and the second communication devices are assigned to a wireless local area network, a WiMAX mobile radio network, a UMTS mobile radio network, an LTE mobile radio network, a 5G mobile radio network or another mobile radio network.

11. Communication system according to one of Claims 1 to 10,
in which the first communication device is designed and configured to process a mobility management entity and/or serving gateway protocol stack.

12. Radio base station for a communication system according to one of Claims 1 to 11, having
- at least one radio transceiver unit (211),
- wherein the radio base station (201) is wirelessly connectable to communication devices (202-204) operated as radio subscriber stations,
- wherein the radio base station is designed and configured to be assigned to a communication device group, wherein the radio base station is wirelessly connectable to communication devices operated as radio subscriber stations only within the same communication device group,
- wherein the radio base station is designed and configured to interchange with communication devices operated as radio subscriber stations data frames (10, 20) that are transmitted by means of radio resources reserved for their associated communication device group,
- wherein the radio base station is designed and configured to determine distances from communication devices operated as radio subscriber stations within their associated communication device group on the basis of signal strength measured values and/or position data,
- wherein the radio base station is designed and configured to allocate radio resources for a radio communication with the respective communication device operated as a radio subscriber station within the associated communication device group on the basis of the determined distances, the radio resources comprising carrier frequencies, bandwidth, transmission time windows and/or transmission power,
- the radio base station is designed and configured to prescribe or to control a reduction in transmission power, increased quality-of-service requirements and/or changed coding and/or modulation schemes for a radio communication with the respective communication device operated as a radio subscriber station if the distance decreases,
**characterized in that**
- the radio base station is arranged or movable on a vehicle,
- there is provision for multiple communication devices operable as a radio base station,
- the radio base station is designed and configured so as, if a communication device operated as a radio base station fails and further communication devices operable as a radio base station are present, to use the latter communication devices to make a selection of the communication device operated as a radio base station.

13. Method for operating a radio communication system for an industrial automation system according to one of Claims 1 to 11, in which
- the radio communication system comprises at least one first communication device (201), operated as a radio base station, that has at least one radio transceiver unit (211), and
- multiple second communication devices (202-204), operated as radio subscriber stations, that are each wirelessly connectable to the first communication device and have at least one radio transceiver unit (221, 231, 241),
- the first communication device and the second communication devices are assignable to a communication device group and wirelessly connectable to one another only within the same communication device group,
- the first communication device and the second communication devices interchange data frames (10, 20) with one another that are transmitted by means of radio resources reserved for their associated communication device group,
- the first communication device and the second communication devices determine distances between the first communication device and the respective second communication device within their associated communication device group on the basis of signal strength measured values and/or position data,
- the first communication device allocates radio resources for a radio communication with the respective second communication device within the associated communication device group on the basis of the determined distances, the radio resources comprising carrier frequencies, bandwidth, transmission time windows and/or transmission power,
- the first communication device prescribes or controls a reduction in transmission power, increased quality-of-service requirements and/or changed coding and/or modulation schemes for a radio communication with the respective second communication device if the distance decreases,
**characterized in that**
- the first communication device is arranged or movable on a vehicle,
- there is provision for multiple communication devices operable as a radio base station,
- the communication devices operable as a radio base station are designed and configured so as, if the first communication device fails and further communication devices operable as a radio base station are present within their radio range, to make a selection of the first communication device operated as a radio base station.

## Revendications

1. Système de radiocommunication d'un système industriel d'automatisation comprenant
- au moins un premier appareil (201) de communication, qui fonctionne en station de base radio et qui comprend au moins une unité (211) radio d'émetteur - récepteur,
- plusieurs deuxièmes appareils (202 à 204) de communication, qui fonctionnent en stations radios de participants, qui peuvent être reliés chacun sans fil au premier appareil de communication et qui comprennent au moins une unité (221, 231, 241) d'émetteur - récepteur radio,
- dans lequel le premier appareil de communication et les deuxièmes appareils de communication sont conformés et conçus pour être affectés à un groupe d'appareils de communication,
- dans lequel le premier appareil de communication et les deuxièmes appareils de communication peuvent être reliés entre eux sans fil seulement au sein du même groupe d'appareils de communication,
- dans lequel le premier appareil de communication et les deuxièmes appareils de communication sont conformés et conçus pour échanger entre eux des trames (10, 20) de données, qui sont transmises au moyen de ressources radio réservées à leur groupe d'appareils de communication affecté,
- dans lequel le premier appareil de communication et les deuxièmes appareils de communication sont conformés et conçus pour déterminer au sein de leur groupe affecté d'appareils de communication, à l'aide de valeurs de mesure de l'intensité du signal et/ou de données de position des distances entre le premier appareil de communication et le deuxième appareil de communication respectif,
- dans lequel le premier appareil de communication est conformé et conçu pour attribuer des ressources radio pour une communication radio avec le deuxième appareil respectif de communication, au sein du groupe affecté d'appareils de communication, en fonction des distances déterminées, dans lequel les ressources radio comprennent des fréquences porteuses, des largeurs de bande, une fenêtre de temps de transmission et/ou une puissance d'émission,
- dans lequel le premier appareil de communication est conformé et conçu pour, pour une communication radio avec le deuxième appareil respectif de communication, si la distance est décroissante, prescrire ou commander une diminution de la puissance d'émission, de plus grandes exigences de qualité de service et/ou des schémas modifiés de codage et/ou de modulation,
caractérisé en ce
- le premier appareil de communication est monté ou peut être déplacé sur un véhicule,
- il est prévu plusieurs appareils de communication pouvant fonctionner en station de base radio,
- les appareils de communication pouvant fonctionner en station de base radio sont conformés et conçus pour, lors d'une panne du premier appareil de communication et en présence d'autres appareils de communication pouvant fonctionner en station de base radio dans sa couverture radio, effectuer un choix du premier appareil de communication fonctionnant en station de base radio.

2. Système de communication suivant la revendication 1,
dans lequel les deuxièmes appareils de communication sont conformés et conçus pour transmettre au premier appareil de communication, lors d'une opération d'entrée en communication avec un premier appareil de communication fonctionnant en station de base radio, des indications sur des ordres de production et/ou des tâches ou des fonctions d'automatisation affectés respectivement, et dans lequel le premier appareil de communication est conformé et conçu pour, en fonction des indications transmises, affecter des deuxièmes appareils de communication à son groupe propre d'appareils de communication ou décliner des demandes d'entrées en communication de deuxièmes appareils de communication.

3. Système de communication suivant l'une des revendications 1 ou 2,
dans lequel une affectation du premier ou du deuxième appareil de communication respectif à un groupe d'appareils de communication s'effectue sur la base d'un statut d'un ordre de production, d'une tâche ou d'une fonction d'automatisation, d'une position d'appareil et/ou d'un laps de temps donné à l'avance.

4. Système de communication suivant l'une des revendications 1 à 3,
dans lequel les appareils de communication pouvant fonctionner en station de base radio sont conformés et conçus pour déterminer d'autres appareils de communication pouvant fonctionner en station de base radio dans leur couverture radio, et pour contrôler des appareils de communication déterminés sur le point de savoir si ceux-ci sont affectés au même groupe d'appareils de communication, et dans lequel les appareils de communication pouvant fonctionner en station de base radio sont conformés et conçus pour, en présence d'autres appareils de communication pouvant fonctionner en station de base radio dans leur couverture radio, qui sont affectés au même groupe d'appareils de communication, choisir entre eux le premier appareil de communication fonctionnant en station de base radio, à l'aide d'une caractérisation d'appareil et/ou d'une valeur de priorité.

5. Système de communication suivant la revendication 4,
dans lequel les appareils de communication pouvant fonctionner en station de base radio peuvent fonctionner au choix en station de participant radio, et dans lequel il est affecté respectivement un rôle de deuxième appareil de communication aux appareils de communication, qui ne sont pas choisis comme premier appareil de communication.

6. Système de communication suivant l'une des revendications 1 à 5,
dans lequel le premier appareil de communication est conformé et conçu pour attribuer de manière adaptative les ressources radio.

7. Système de communication suivant l'une des revendications 1 à 6,
dans lequel le premier appareil de communication et les deuxièmes appareils de communication sont conformés et conçus pour échanger entre eux des trames (10, 20) de données, qui sont transmises au moyen de ressources radio réservées exclusivement au groupe d'appareils de communication, qui leur est affecté.

8. Système de communication suivant l'une des revendications 1 à 7,
dans lequel le premier appareil de communication est conformé et conçu pour libérer des ressources radio non nécessaires pour les utiliser par d'autres groupes d'appareils de communication.

9. Système de communication suivant l'une des revendications 1 à 8,
dans lequel le premier appareil de communication et les deuxièmes appareils de communication sont conformés et conçus pour empêcher une collusion CSMA et/ou pour l'application de Listen Before Talk.

10. Système de communication suivant l'une des revendications 1 à 9,
dans lequel le premier appareil de communication et le deuxième appareil de communication sont affectés à Wireless Local Area Network à un réseau radio mobile Wi-MAX, UMTS, LTE, 5G ou un autre réseau radio mobile.

11. Système de communication suivant l'une des revendications 1 à 10,
dans lequel le premier appareil de communication est conçu pour le traitement d'une Mobility Management Entity et/ou d'un Serving Gateway Protokollstacks.

12. Station de base radio d'un système de communication suivant l'une des revendications 1 à 11 comprenant
- au moins une unité (211) d'émetteur - récepteur radio,
- dans laquelle la station (201) de base radio peut être reliée sans fil à des appareils (202 à 204) de communication fonctionnant en stations de participants radio,
- dans laquelle la station de base radio est conformée et conçue pour être affectée à un groupe d'appareils de communication, la station de base radio pouvant être reliée sans fil seulement au sein du même groupe d'appareils de communication à des appareils de communication fonctionnant en stations de participants radio,
- dans laquelle la station de base radio est conformée et conçue pour échanger avec des appareils de communication fonctionnant en station de participant radio, des trames (10, 20) de données, qui sont transmises au moyen de ressources radio réservées pour le groupe d'appareils de communication, qui lui est affecté,
- dans laquelle la station de base radio est conformée et conçue pour déterminer, dans le groupe d'appareils de communication, qui lui est affecté, à l'aide de valeurs de mesure d'intensité du signal et/ou de données de position, des distances à des appareils de communication fonctionnant en stations de participants radio,
- dans laquelle la station de base radio est conformée et conçue pour attribuer, pour une communication radio avec l'appareil de communication respectif fonctionnant en station de participant radio au sein du groupe d'appareils de communication affecté, des ressources radio en fonction des distances déterminées, des ressources radio comprenant des fréquences porteuses, des largeurs de bande, une fenêtre de temps de transmission et/ou une puissance d'émission,
- la station de base radio est conformée et conçue pour, pour une communication radio avec l'appareil de communication respectif fonctionnant en station de participant radio, alors que la distance diminue, prescrire ou commander une diminution de la puissance d'émission, une augmentation des exigences de qualité de service et/ou des schémas de codage et/ou de modulation modifiés,
caractérisée en ce
- le premier appareil de communication est monté ou peut être déplacé sur un véhicule,
- il est prévu plusieurs appareils de communication pouvant fonctionner en station de base radio,
- la station de base radio est conformée et conçue pour, en cas de panne d'un appareil de communication fonctionnant en station de base radio et en présence d'autres appareils de communication pouvant en fonctionner en station de base radio, effectuer avec ceux-ci un choix de l'appareil de communication fonctionnant en station de base radio.

13. Procédé pour faire fonctionner un système de communication radio d'un système industriel d'automatisation suivant l'une des revendications 1 à 11, dans lequel
- le système de communication radio a au moins un premier appareil (201) de communication, qui fonctionne en station de base radio et qui a au moins une unité (211) d'émetteur - récepteur radio, et
- comprend plusieurs deuxièmes appareils (202 à 204) de communication, qui fonctionnent en stations de participants radio, qui peuvent chacun être reliés sans fil au premier appareil de communication et qui ont au moins une unité (221, 231, 241) d'émetteur - récepteur radio,
- le premier appareil de communication et les deuxièmes appareils de communication peuvent être affectés à un groupe d'appareils de communication et peuvent être reliés entre eux sans fil seulement au sein du même groupe d'appareils de communication,
- le premier appareil de communication et les deuxièmes appareils de communication échangent entre eux des trames (10, 20) de données, qui sont transmises au moyen de ressources réservées au groupe d'appareils de communication, qui leur est affecté,
- le premier appareil de communication et les deuxièmes appareils de communication déterminent au sein du groupe d'appareils de communication, qui leur est affecté, à l'aide de valeurs de mesure d'intensité du signal et/ou de données de position, des distances entre le premier appareil de communication et le deuxième appareil respectif de communication,
- le premier appareil de communication attribue, pour une communication radio avec le deuxième appareil respectif de communication, au sein du groupe d'appareils de communication affecté, des ressources radio en fonction des distances déterminées, des ressources radio comprenant des fréquences porteuses, des largeurs de bande, une fenêtre de temps de transmission et/ou une puissance d'émission,
- le premier appareil de communication prescrit ou commande, pour une communication radio avec le deuxième appareil respectif de communication, alors que la distance est décroissante, une diminution de la puissance d'émission, une augmentation des exigences de qualité de service et/ou des schémas modifiés de codage et/ou de modulation, caractérisé en ce
- le premier appareil de communication est monté ou peut être déplacé sur un véhicule,
- il est prévu plusieurs appareils de communication pouvant fonctionner en station de base radio,
- les appareils de communication pouvant fonctionner en station de base radio effectuent, en cas de panne du premier appareil de communication et en présence d'autres appareils de communication pouvant fonctionner en station de base radio, au sein de leur couverture radio, un choix du premier appareil de communication fonctionnant comme station de base radio.
